# EUROPEAN PATENT APPLICATION

(11) **EP 2 518 933 A1**
(43) Date of publication of application: **31.10.2012**
(21) Application number: 10838665.7
(22) Date of filing: 21.12.2010
(51) Int. Cl.: H04L 9/32

(54) **IMPLEMENTING METHOD, SYSTEM OF UNIVERSAL CARD SYSTEM AND SMART CARD**

(30) Priority: 21.12.2009 CN 200910243427
(71) Applicant: China Mobile Communications Corporation, Beijing 100032 (CN)
(72) Inventor: YUE, Zuhui, Beijing 100032 (CN); GUO, Manxue, Beijing 100032 (CN); REN, Xiaoming, Beijing 100032 (CN); LUO, Feng, Beijing 100032 (CN); LI, Yaqiang, Beijing 100032 (CN)
(74) Representative: Nony
(86) International application number: PCT/CN2010/080042
(87) International publication number: WO 2011/076102

(57) **Abstract**

An implementing method, a system of a universal card system and a smart card are disclosed. The smart card receives the creating master control sub-application message from a card-issuing party operation platform, decrypts the message according to a pre-stored encryption key of the card-issuing party sensitive data, obtains the master control sub-application data, and creates a master control sub-application according to the master control sub-application data. An enterprise managing key is included in the master control sub-application data. The smart card receives the creating non-master control sub-application message from an enterprise operation platform, decrypts the creating non-master control sub-application message according to encryption key of the enterprise sensitive data in the enterprise managing key, obtains the non-master control sub-application data, and creates a non-master control sub-application according to the non-master control sub-application data.

## Description

### Field of the Invention

The present invention relates to the field of universal card technology, particularly to an implementing method, a system of a universal card system and a smart card.

### Background of the Invention

Universal card systems facilitate realizing information exchange, share and universal management within enterprises. Current enterprise universal card systems have covered all aspects, including employee identity recognition, employee work attendance, payroll management, personnel management, electronic door control, entrance control, vehicle entry-exit management, employee internal consumption management, meeting electronic sign-in, and security guard patrol management, etc. It can be seen universal card systems have penetrated into all links of enterprise management, making management tasks more efficient and scientific.

Most traditional universal card systems are based on contact or non-contact ICs (Integrated Circuits) for their implementation. With technological development, it has expanded to SIM (Subscriber Identity Module) cards, USIM (Universal Subscriber Identity Module) cards, etc. in mobile phones. In practical applications, the aforementioned IC cards, SIM cards, USIM cards, etc. are collectively referred to as smart cards.

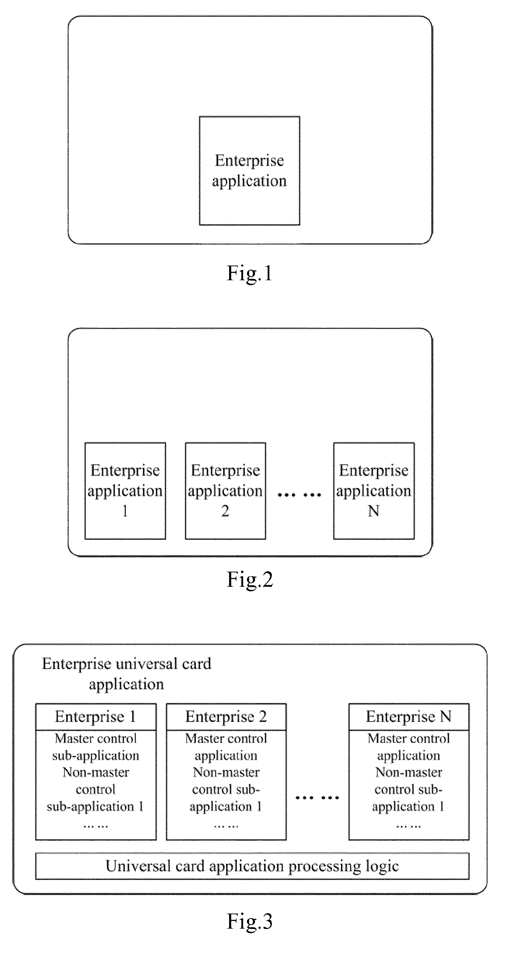

Smart cards usually only include applications of one enterprise, and can be divided into single-application cards and multi-application cards. As shown in Figure 1, which is a schematic diagram of an existing single-application card, the card only includes a certain application of a certain enterprise, such as an employee identity recognition application or payroll management application, etc. As shown in Figure 2, which is a schematic diagram of an existing multi-application card, the card includes multiple applications of a certain enterprise, for example, simultaneously including the employee identity recognition application and payroll management application, etc.

Existing universal card systems bring about convenience to subscribers, and at the same time have some shortcomings, for example:

All applications on a smart card are in a preset mode, so dynamic management can not be implemented, for example, an application can not be added as needed; in addition, the exiting smart cards only include applications of a single enterprise, and coexistence of multiple enterprises can not be achieved, for example, the two applications of employee identity recognition and vehicle entry-exit management correspond to two different enterprises, one being a company A in which a subscriber works, and the other being a property management company B for the office building where the company A is located. As the subscriber may often use the two applications at the same time, and thus will expect the two applications existing on the same card; however, it is still impossible to meet the subscriber need in the prior art.

### Summary of the Invention

In view of this, the main aim of the present invention is to provide an implementing method of a universal card system, which can realize dynamic management of applications and coexistence of multi-enterprise applications.

Another aim of the present invention is to provide an implementing system of the universal card system, which can realize dynamic management of applications and coexistence of multi-enterprise applications.

A further aim of the present invention is to provide a smart card, which can realize dynamic management of applications and coexistence of multi-enterprise applications.

In order to achieve the aims described above, the technical solution of the present invention is implemented as follows:

An implementing method of a universal card system includes:
through a smart card, receiving a creating master control sub-application message from a card-issuing party operation platform, decrypting the message according to a pre-stored encryption key of card-issuing party sensitive data, obtaining master control sub-application data, and creating a master control sub-application according to the master control sub-application data, wherein an enterprise management key is included in the master control sub-application data; and
receiving a creating non-master control sub-application message from an enterprise operation platform, decrypting the creating non-master control sub-application message according to an encryption key of enterprise sensitive data in the enterprise management key, obtaining non-master control sub-application data, and creating a non-master control sub-application according to the non-master control sub-application data.

An implementing system of a universal card system includes a smart card, a card-issuing party operation platform and an enterprise operation platform, wherein
the smart card is configured to receive a creating master control sub-application message from the card-issuing party operation platform, decrypt the message according to a pre-stored encryption key of the card-issuing party sensitive data, obtain master control sub-application data, and create a master control sub-application according to the master control sub-application data, wherein an enterprise management key is included in the master control sub-application data; and to receive a creating non-master control sub-application message from the enterprise operation platform, decrypt the creating non-master control sub-application message according to an encryption key of the enterprise sensitive data in the enterprise management key, obtaining non-master control sub-application data, and create a non-master control sub-application according to the non-master control sub-application data.

A smart card includes a universal card application processing logic unit and a storage unit, wherein
the universal application processing logic unit is configured to receive a creating master control sub-application message from a card-issuing party operation platform, decrypt the message according to a pre-stored encryption key of card-issuing party sensitive data, obtain master control sub-application data, and create a master control sub-application in the storage unit according to the master control sub-application data, wherein an enterprise management key is included in the master control sub-application data; and to receive a creating non-master control sub-application message from an enterprise operation platform, decrypt the creating non-master control sub-application message according to an encryption key of enterprise sensitive data in the enterprise management key, obtain non-master control sub-application data, and create a non-master control sub-application in the storage unit according to the non-master control sub-application data; and
the storage unit is configured to store the created master control sub-application and non-master control sub-application.

It can be seen, by using the technical solution of the present invention, the universal card application processing logic unit in the smart card creates the master control sub-application according to the message received from the card-issuing party operation platform, and creates the non-master control sub-application according to the message received from the enterprise operation platform and the master control sub-application. Compared with the prior art, by adopting the solution of the present invention multi-enterprise applications can be created on one smart card, and applications of each enterprise can be dynamically managed, for example, adding and deleting according to requirements.

### Brief Description of the Drawings

Figure 1 is a schematic diagram of a single-application card in the prior art;

Figure 2 is a schematic diagram of a multi-application card in the prior art;

Figure 3 is a schematic diagram of the application structure of a smart card in an embodiment of the present invention;

Figure 4 is a flow chart of the method embodiment in an embodiment of the present invention;

Figure 5 is a schematic diagram of a first secure transmission model in an embodiment of the present invention;

Figure 6 is a schematic diagram of a second secure transmission model in an embodiment of the present invention;

Figure 7 is a schematic diagram of a third secure transmission model in an embodiment of the present invention;

Figure 8 is a schematic diagram of the compositional structure of the system embodiment in an embodiment of the present invention;

Figure 9 is a schematic diagram of the compositional structure of the smart card embodiment in an embodiment of the present invention.

### Detailed Description of the Embodiments

In view of the problems existing in the prior art, a brand new implementation method of a universal card is proposed in the present invention. The application structure in the corresponding smart card is as shown in Figure 3, in which each enterprise has a master control sub-application, each master control sub-application corresponds to a plurality of non-master control sub-applications, and all enterprises share a common universal card application processing logic; the master control sub-application is mainly used for authorizing the creation and management of each non-master control sub-application, the non-master control sub-application being a particular sub-application of an enterprise, such as canteen consumption sub-application, employee identity recognition sub-application and payroll management sub-application, etc.; before non-master control sub-applications of an enterprise are created, a master control sub-application of the enterprise must be created at first; all enterprises share a space pool, that is, a shared space is developed in the smart card in advance, and a corresponding space is allocated from the shared space when master control and non-master control sub-applications are created by each enterprise.

The present invention will be further described in details, with reference to the accompanying drawings and by way of the embodiments, to make the aim, technical solutions and advantages of the present invention more clear and apparent.

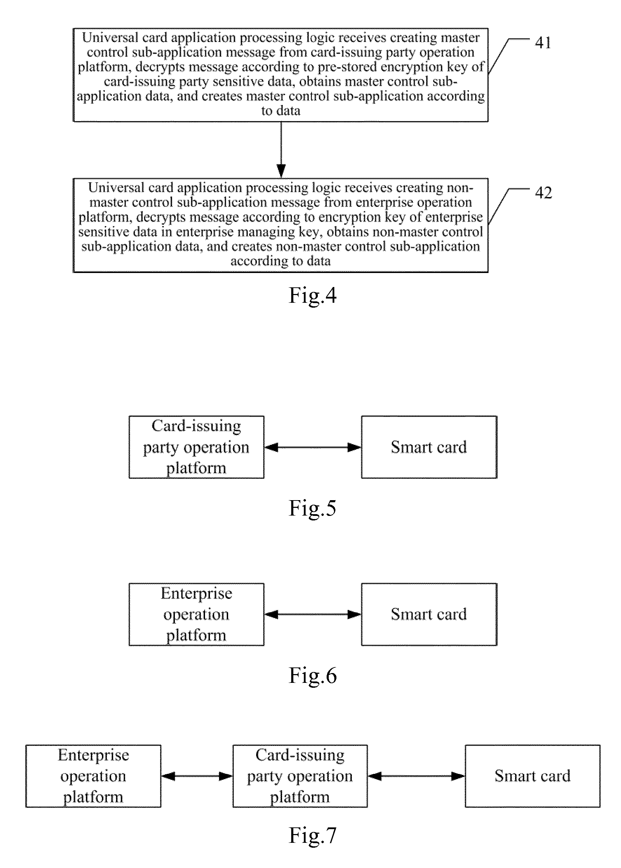

Figure 4 is a flow chart of an embodiment of a method of the present invention. As shown in Figure 4, the method includes the following steps:

Step 41: a universal application processing logic receives a creating master control sub-application message from a card-issuing party operation platform, decrypts the message according to a pre-stored encryption key of card-issuing party sensitive data, obtains master control sub-application data, and creates a master control sub-application according to the master control sub-application data.

In the solution described in the present invention, a three-layer key structure is defined, including a card-issuing party management key, an enterprise management key and a sub-application key, respectively, as shown in Table 1:

**Table 1: three-layer key structure**

| **Key layer** | **Key type** | **Use** | **Storage location** | |
|---|---|---|---|---|
| Card-issuing party management key | Encryption key of card-issuing party sensitive data | Performing data encryption and authority verification for the following functions: | Smart card; card-issuing party operation | |
| | | ● Creating, and suspending/recovering master control sub-application | platform | |
| | | ● Deleting sub-application (including master control and non-master control sub-application) | | |
| | | ● Recovering enterprise management key | | |
| | | ● Unlocking master control and/or non-master control sub-application Incapable of implementing the following functions: | | |
| | | ● Updating enterprise management key | | |
| | | ● Reading and updating non-master control sub-application data | | |
| | | Note : authority verification is implemented through an MAC calculated by the key carried in the message, and the calculating data of the MAC should include key information related to the message. | | |
| | Encryption key of card-issuing party non-sensitive data | Encryption of non-sensitive data between card-issuing party operation platform and smart card | Smart card; card-issuing party operation platform | |
| | Card-issuing party MAC key | Integration protection of data between card-issuing party operation platform and smart card | Smart card; card-issuing party operation platform | |
| Enterprise management key | Encryption key of enterprise sensitive data | Data encryption and authority verification for the following functions: | Smart card; enterprise operation | |
| | | | ● Creating and suspending/recovering non-master control sub-application of enterprise | platform |
| | | | ● Updating enterprise management key | |
| | | | ● Updating non-master control sub-application data | |
| | Encryption key of enterprise non-sensitive data | | Encryption of non-sensitive data between enterprise operation platform and smart card | Smart card; enterprise operation platform |
| | Enterprise MAC key | | Integration protection of data between enterprise operation platform and smart card | Smart card; enterprise operation platform |
| Sub-application key (example) | Identity recognition key | Identity recognition application key | Authentication in card-swiping process of Identity recognition application, such as door control, work attendance, etc. | Smart card; SAM (Safety authentication module) card at door control/work attendance terminal |
| | Online consumption key | Online transaction authentication key | Authentication of online transaction | Smart card; enterprise operation platform |
| | | Online transaction TAC key | Generation of TAC (Transaction Authorization Code) of online transaction | |
| | Offline consumption key | Consumption key | Authentication in card-swiping process of POS (Point of Sales) | Smart cad; SAM card at consumption terminal |
| | | Recharge key | Recharge | Smart card; enterprise operation platform |
| | | Offline transaction TAC key | Generation of TAC consumption-related transaction | Smart card; enterprise operation platform |

As shown in Table 1, the card-issuing party management key includes: the encryption key of the card-issuing party sensitive data, the encryption key of the card-issuing party non-sensitive data and the card-issuing party MAC (Message Authentication Code); the enterprise management key includes: the encryption key of the enterprise sensitive data, the encryption key of the enterprise non-sensitive data and the enterprise MAC; and the sub-application key is only described by way of example, and in practical applications, sub-application keys are different dependent upon different types of the non-master control sub-applications. The particular functions of the card-issuing party management key and the enterprise management key shown in Table 1 will be described below in details.

At an initial status, only a universal card application processing logic is provided in the smart card, and when a master control sub-application of a certain enterprise needs to be created, the card-issuing party operation platform sends a creating master control sub-application message to the smart card, and encrypts the creating master control sub-application message by using the encryption key of the card-issuing party sensitive data; the universal card processing logic decrypts the received message by using the encryption key of the card-issuing party sensitive data, obtains the master control sub-application data, including information about enterprise name, enterprise management key, etc., and creates a master control sub-application according to the obtained master control sub-application data, that is, allocates a space for the master control sub-application, and then stores the master control sub-application data in the space.

Step 42: the universal application processing logic receives a creating non-master control sub-application message from an enterprise operation platform, decrypts the message according to the encryption key of enterprise sensitive data in the enterprise management key, obtains non-master control sub-application data, and creates a non-master control sub-application according to the data.

After the master-control sub-application of the certain enterprise is created by the mode shown in step 41, in this step, the enterprise operation platform sends a creating non-master control sub-application message to the smart card, and performs decryption by using the encryption key of the enterprise sensitive data; the universal application processing logic in the smart card decrypts the received message by using the encryption key of the enterprise sensitive data, obtains non-master control sub-application data, that is, allocates a corresponding space for the non-master control sub-application, and then stores the non-master control sub-application data in the space. The non-master control sub-application data includes a sub-application key, a belonging enterprise identity and other data particularly related to the sub-application type, etc.

Subsequently, the card-issuing party operation platform and the enterprise operation platform can also manage the smart card, i.e. sends a management message, according to their own requirements, and performs encryption in different encryption modes according to different sensitivities of data carried in the management message, for example, encrypting the management message carrying sensitive data by using the encryption key of the sensitive data, and encrypting the management message carrying non-sensitive data by using the encryption key of the non-sensitive data; and implements different operations according to different message contents.

As shown in Table 1, for the card-issuing party operation platform, the management message carrying sensitive data send by it mainly includes: a suspending or recovering master control sub-application message, a deleting master control and/or non-master control sub-application message, a recovering enterprise management key message, and an unlocking master control and/or non-master control sub-application message, etc.; and for the enterprise operation platform, the management message carrying sensitive data send by it mainly includes: a suspending or recovering non-master control sub-application message, an updating enterprise management key message and an updating non-master control sub-application data message, etc.

Among them, the suspending or recovering master control sub-application message, the deleting master control and/or non-master control sub-application message and the suspending or recovering non-master control sub-application message have the same particular functions as the message names indicate, and will not be interpreted; the updating enterprise management key message is mainly used for modifying a key set by the card-issuing party operation platform at the initial stage of application creation, and the recovering enterprise management key message is used for recovering the value of a key to be original valve when a subscriber forgets his modified key; the unlocking master control and/or non-master control sub-application message is used for performing decryption when a master control and/or non-master control sub-application is locked due to malicious attack or misoperation by the subscriber; and the updating non-master control sub-application message is used for updating non-master control sub-application data, such as balance on the card, etc.

Table 1 is described only by way of example, and in practical applications, it can be determined according to practical requirements, which is sensitive data and which is not sensitive data.

In addition, after the encryption operation is completed, the card-issuing party operation platform and the enterprise operation platform can also perform integrity protection on the message to be sent to the universal card application processing logic by using the encryption key of their respective sensitive data or MAC key; and the universal card application processing logic performs integrity check on the received message according to the encryption key of the sensitive data or MAC key of each platform, and performs decryption operation after the message passes the check. In this way, not only is the privacy of the message is ensured, but also its integrity is ensured.

Based on the above description and according to the different objects involved in the message transmission process, three secure transmission models are defined in the solution described by the present invention: card-issuing party operation platform-smart card, enterprise operation platform-smart card, and enterprise operation platform-card-issuing party operation platform-smart card, respectively.

Figure 5 is a schematic diagram of a first secure transmission model of the present invention. As shown in Figure 5, the card-issuing party operation platform performs encryption protection on the message to be sent to the universal card by using the encryption key of the card-issuing party sensitive data or the encryption key of the card-issuing party non-sensitive data, and performs integrity protection by using the encryption key of the card-issuing party sensitive data or the card-issuing party MAC key; and the smart card performs integrity check on the received message, and performs decryption operation after the message passes the check.

Figure 6 is a schematic diagram of a second secure transmission model of the present invention. As shown in Figure 6, the enterprise operation platform performs encryption protection on the message to be sent to the smart card by using an encryption key of enterprise sensitive data or an encryption key of enterprise non-sensitive data, and performs integrality protection by using the encryption key of the enterprise sensitive data or an enterprise MAC key; and the smart card performs integrality check on the received message, and performs decryption operation after the message passes the check.

Figure 7 is a schematic diagram of a third secure transmission model of the present invention. Under some conditions, an enterprise operation platform, for example, needs to send an updating non-master control sub-application data message to the smart card; however, the smart card is an SIM card in a mobile phone, and the enterprise operation platform can not communicate with the smart card directly, so a card-issuing party operation platform, assumed to be China Mobile, is required, i.e. the message is sent by means of short messages, therefore the secure transmission model as shown in Figure 7 will be required. The enterprise operation platform respectively performs encryption and integrality protection on the message; then based on this, the card-issuing party operation platform further performs encryption and integrality protection; after receiving the message, the smart card firstly performs integrality check according to an encryption key of card-issuing party sensitive data or a card-issuing party MAC key, decrypts the message according to the encryption key of the card-issuing party sensitive data or an encryption code of card-issuing party non-sensitive data after the message passes the check, then performs integrality check again according to an encryption key of enterprise sensitive data or an enterprise MAC key, and decrypts the checked message according to the encryption key of the enterprise sensitive data or the encryption key of the enterprise non-sensitive data after the message passes the check.

Subsequently, universal card application processing logic can complete specific applications according to various non-master control sub-application data, specifically implemented as the prior art, in addition, how encryption and integrality protection as well as decryption and integrality check are performed is also the prior art, so repeated description is omitted.

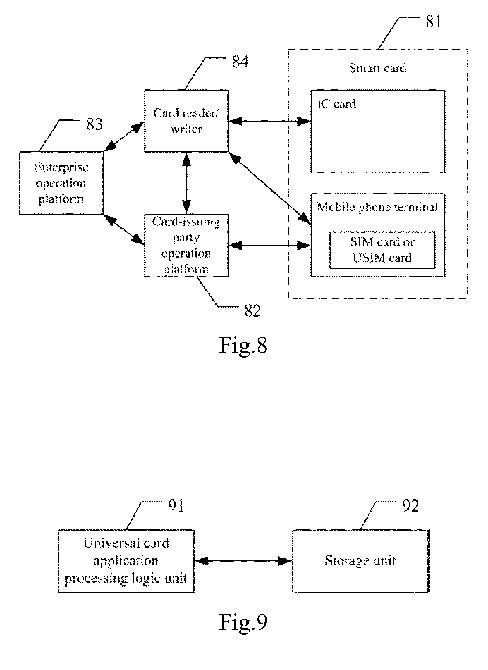

On the basis of above introduction, Figure 8 is a schematic diagram of the composition structure of the system embodiment of the present invention. As shown in Figure 8, the system includes a smart card 81, a card-issuing party operation platform 82 and an enterprise operation platform 83, wherein
the smart card 81 is configured to receive a creating master control sub-application message from the card-issuing party operation platform 82, decrypt the message according to a pre-stored encryption key of the card-issuing party sensitive data, obtain master control sub-application data, and create a master control sub-application according to the master control sub-application data, wherein an enterprise management key is included in the master control sub-application data; and to receive a creating non-master control sub-application message from the enterprise operation platform 83, decrypt the creating non-master control sub-application message according to an encryption key of the enterprise sensitive data in the enterprise management key, obtain non-master control sub-application data, and create a non-master control sub-application according to the non-master control sub-application data,
wherein, the card-issuing party operation platform 82 can be further configured to send a management message to the smart card 81, and perform encryption by using different encryption modes according to different sensitivities of data carried in the management message, the encryption modes include: encrypting the management message carrying sensitive data by using the encryption key of the card-issuing party sensitive data, and encrypting the management message carrying non-sensitive data by using the encryption key of the card-issuing party non-sensitive data; and the smart card 81 is further configured to decrypt the received management message according to the pre-stored encryption key of the card-issuing party sensitive data or the pre-stored encryption key of the card-issuing party non-sensitive data, and implement different operations according to different message contents.

The enterprise operation platform 83 is further configured to send a management message to the smart card 81, and perform encryption by using different encryption modes according to different sensitivities of data carried in the management message, the encryption modes include: encrypting the management message carrying sensitive data by using the encryption key of the enterprise sensitive data, and encrypting the management message carrying non-sensitive data by using the encryption key of the enterprise non-sensitive data; and the smart card 81 is further configured to decrypt the received management message according to the encryption key of the enterprise sensitive data or the encryption key of the enterprise non-sensitive data in the enterprise management key, and implement different operations according to different message contents.

The enterprise operation platform 83 can also be further configured to encrypt a message to be sent to the smart card 81 by using the encryption key of the enterprise sensitive data or the encryption key of the enterprise non-sensitive data, and send the encrypted message to the card-issuing party operation platform 82; the card-issuing party operation platform 82 is further configured to encrypt the received message by using the encryption key of the card-issuing party sensitive data or the encryption key of the card-issuing party non-sensitive data, and send the message encrypted again to the smart card 81; and the smart card 81 is further configured to decrypt the received management message by successively using the encryption key of the card-issuing party sensitive data or the encryption key of the card-issuing party non-sensitive data, and the encryption key of the enterprise sensitive data or the encryption key of the enterprise non-sensitive data.

In addition, a card-issuing party MAC key is further stored in the smart card 81, and the enterprise management key further includes an enterprise MAC key; the card-issuing party operation platform 82 and the enterprise operation platform 83 are further configured to perform integrality protection on the message to be sent to the smart card 81 by using the encryption key of their respective sensitive data or MAC key after encryption operation is completed. The smart card 81 performs integrity check on the received message according to the encryption key of the sensitive data or MAC key of each platform, and implements decryption operation after the message passes the check.

In practical applications, the system as shown in Figure 8 also further includes a card reader/writer 84, and the specific functions of the card reader/writer 84, its connection relation with other components and interfaces of the components as shown in Figure 8 are all the same as those in the prior art, and repeated description is omitted.

Figure 9 is a schematic diagram of the compositional structure of the smart card embodiment of the present invention. The smart card, as shown in Figure 9, includes a universal card application processing logic unit 91 and a storage unit 92, wherein
the universal card application processing logic unit 91 can be configured to receive a creating master control sub-application message from a card-issuing party operation platform, decrypt the message according to a pre-stored encryption key of the card-issuing party sensitive data, obtain master control sub-application data, and create a master control sub-application in the storage unit according to the master control sub-application data, wherein an enterprise management key is included in the master control sub-application data; and to receive a creating non-master control sub-application message from an enterprise operation platform, decrypt the creating non-master control sub-application message according to an encryption key of enterprise sensitive data in the enterprise management key, obtain non-master control sub-application data, and create a non-master control sub-application in the storage unit according to the non-master control sub-application data; and
the storage unit 92 is configured to store the created master control sub-application and non-master control sub-application.

The universal card application processing logic unit 91 can be further configured to receive a management message from the card-issuing party operation platform, decrypt the received management message according to the pre-stored encryption key of the card-issuing party sensitive data or the encryption key of the card-issuing party non-sensitive data, and implement different operations according to different message contents, and to receive a management message from the enterprise operation platform, decrypt the received management message according to the encryption key of the enterprise sensitive data or the encryption key of the enterprise non-sensitive data, and implement different operations according to different message contents.

In addition, the universal card application processing logic unit 91 can also be further configured to receive a management message sent by the enterprise operation platform through the card-issuing party operation platform, and decrypt the received management message by successively using the pre-stored encryption key of the card-issuing party sensitive data or the pre-stored encryption key of the card-issuing party non-sensitive data, and the encryption key of the enterprise sensitive data or the encryption key of the enterprise non-sensitive data in the enterprise management key. The universal card application processing logic unit can also be configured to perform integrity check on the received management message according to the pre-stored encryption key of the card-issuing party sensitive data or the pre-stored card-issuing party MAC key, and/or perform integrity check on the received management message according to the encryption key of the enterprise sensitive data or the enterprise MAC key in the received management message, and implement decryption operation after the message passes the check.

With respect to the specific working processes of the system and device embodiments as shown in Figures 8 and 9, please make reference to corresponding description in the method embodiment as shown in Figure 4, so repeated description is omitted.

In summary, by using the technical solution of the present invention, not only can applications be dynamically managed, but also coexistence of multi-enterprise applications are realized, and privacy and integrity of data transmission are ensured.

Overall, the abovementioned are only preferable embodiments of the present invention, and are not intended to limit the protective scope of the present invention. Any modification, equivalent substitution and improvement made within the principle of the present invention should be covered in the protective scope of the present invention.

## Claims

1. An implementing method of a universal card system, comprising:
through a smart card, receiving a creating master control sub-application message from a card-issuing party operation platform, decrypting the message according to a pre-stored encryption key of card-issuing party sensitive data, obtaining master control sub-application data, and creating a master control sub-application according to the master control sub-application data, wherein an enterprise management key is included in the master control sub-application data; and
receiving a creating non-master control sub-application message from an enterprise operation platform, decrypting the creating non-master control sub-application message according to an encryption key of enterprise sensitive data in the enterprise management key, obtaining non-master control sub-application data, and creating a non-master control sub-application according to the non-master control sub-application data.

2. The method according to claim 1, further comprising:
through the smart card, receiving a management message sent by the card-issuing party operation platform, wherein the received management message is sent after being encrypted in different encryption modes by the card-issuing party operation platform according to different sensitivities of data carried in the management message, the encryption modes comprising encrypting the management message carrying sensitive data by using an encryption key of the card-issuing party sensitive data, and encrypting the management message carrying non-sensitive data by using an encryption key of the card-issuing party non-sensitive data; and
decrypting the received management message according to the pre-stored encryption key of the card-issuing party sensitive data or the pre-stored encryption key of the card issuer non-sensitive data, and implementing different operations according to different message contents.

3. The method according to claim 2, wherein the management message carrying sensitive data comprises: a suspending or recovering master control sub-application message, a deleting the master control and/or non-master control sub-application message, a recovering enterprise management key message, and an unlocking master control and/or non-master control sub-application message.

4. The method according to claim 1, further comprising:
through the smart card, receiving a management message sent by the enterprise operation platform, wherein the management message is sent after being encrypted in different encryption modes by the enterprise operation platform according to different sensitivities of data carried in the management message, the encryption modes comprising: encrypting management message carrying sensitive data by using the encryption key of the enterprise sensitive data, and encrypting management message carrying non-sensitive data by using the encryption key of the enterprise non-sensitive data; and
decrypting the received management message according to the encryption key of the enterprise sensitive data or the encryption key of the enterprise non-sensitive data in the enterprise management key, and implementing different operations according to different message contents.

5. The method according to claim 4, wherein the management message carrying sensitive data comprises: a suspending or recovering non-master control sub-application message, an updating enterprise management key message and an updating non-master control sub-application data message.

6. The method according to claim 1, further comprising:
through the smart card, receiving a management message sent by the enterprise operation platform through the card-issuing party operation platform, wherein the received management message is sent after being encrypted by the card-issuing party operation platform by using the encryption key of card-issuing party sensitive data or the encryption key of the card-issuing party non-sensitive data, after the management message is sent to the card-issuing party operation platform after being encrypted by the enterprise operation platform by using the encryption key of the enterprise sensitive data or the encryption key of the enterprise non-sensitive data; and
decrypting the received management message by successively using the encryption key of the card-issuing party sensitive data or the encryption key of the card-issuing party non-sensitive data, and the encryption key of the enterprise sensitive data or the encryption key of the enterprise non-sensitive data.

7. The method according to any one of claims 1-6, wherein a card-issuing party MAC (message authentication code) key is further stored in the smart card, and the enterprise management key further comprises an enterprise MAC key; and
the message received by the smart card is sent after being performed integrity protection by the card-issuing party operation platform and the enterprise operation platform by using the encryption key of their respective sensitive data or MAC key, after encryption operation is completed;
and the method further comprises:
through the smart card, performing integrity check on the received message according to the encryption key of the sensitive data or MAC key of each platform, and implementing decryption operation after the message passes the check.

8. An implementing system of a universal card system, comprising a smart card, a card-issuing party operation platform and an enterprise operation platform, wherein
the smart card is configured to receive a creating master control sub-application message from the card-issuing party operation platform, decrypt the message according to a pre-stored encryption key of the card-issuing party sensitive data, obtain master control sub-application data, and create a master control sub-application according to the master control sub-application data, wherein an enterprise management key is included in the master control sub-application data; and to receive a creating non-master control sub-application message from the enterprise operation platform, decrypt the creating non-master control sub-application message according to an encryption key of the enterprise sensitive data in the enterprise management key, obtain non-master control sub-application data, and create a non-master control sub-application according to the non-master control sub-application data.

9. The system according to claim 8, wherein the card-issuing party operation platform is further configured to send a management message to the smart card, and perform encryption by using different encryption modes according to different sensitivities of data carried in the management message, the encryption modes comprising: encrypting the management message carrying sensitive data by using the encryption key of the card-issuing party sensitive data, and encrypting the management message carrying non-sensitive data by using the encryption key of the card-issuing party non-sensitive data; and
the smart card is further configured to decrypt the received management message according to the pre-stored encryption key of the card-issuing party sensitive data or the pre-stored encryption key of the card-issuing party non-sensitive data, and implement different operations according to different message contents.

10. The system according to claim 8, wherein the enterprise operation platform is further configured to send a management message to the smart card, and perform encryption by using different encryption modes according to different sensitivities of data carried in the management message, the encryption modes comprising: encrypting the management message carrying sensitive data by using the encryption key of the enterprise sensitive data, and encrypting the management message carrying non-sensitive data by using the encryption key of the enterprise non-sensitive data; and
the smart card is further configured to decrypt the received management message according to the encryption key of the enterprise sensitive data or the encryption key of the enterprise non-sensitive data in the enterprise management key, and implement different operations according to different message contents.

11. The system according to claim 8, wherein
the enterprise operation platform is further configured to encrypt the message to be sent to the smart card by using the encryption key of the enterprise sensitive data or the encryption key of the enterprise non-sensitive data, and send the encrypted message to the card-issuing party operation platform;
the card-issuing party operation platform is further configured to encrypt the received message by using the encryption key of the card-issuing party sensitive data or the encryption key of the card-issuing party non-sensitive data, and sending the encrypted message to the smart card; and
the smart card is further configured to decrypt the received management message by successively using the encryption key of the card-issuing party sensitive data or the encryption key of the card-issuing party non-sensitive data, and the encryption key of the enterprise sensitive data or the encryption key of the enterprise non-sensitive data.

12. The system according to any one of claims 8-11, wherein a card-issuing party MAC key is further stored in the smart card, and the enterprise management key further comprises an enterprise MAC key;
the card-issuing party operation platform and the enterprise operation platform are further configured to perform integrality protection on the message to be sent to the smart card by using the encryption key of their respective sensitive data or MAC key after encryption operation is completed; and
the smart card is further configured to perform integrity check on the received message according to the sensitive data encryption key or MAC key of each platform, and perform decryption operation after the message passes the check.

13. A smart card, comprising a universal card application processing logic unit and a storage unit, wherein
the universal application processing logic unit is configured to receive a creating master control sub-application message from a card-issuing party operation platform, decrypt the message according to a pre-stored encryption key of card-issuing party sensitive data, obtain master control sub-application data, and create a master control sub-application in the storage unit according to the master control sub-application data, wherein an enterprise management key is included in the master control sub-application data; and to receive a creating non-master control sub-application message from an enterprise operation platform, decrypt the creating non-master control sub-application message according to an encryption key of enterprise sensitive data in the enterprise management key, obtain non-master control sub-application data, and create a non-master control sub-application in the storage unit according to the non-master control sub-application data; and
the storage unit is configured to store the created master control sub-application and non-master control sub-application.

14. The smart card according to claim 13, wherein the universal card application processing logic unit is further configured to receive a management message from the card-issuing party operation platform, decrypt the received management message according to the pre-stored encryption key of the card-issuing party sensitive data or the encryption key of the card-issuing party non-sensitive data, and implement different operations according to different message contents; and
receive a management message from the enterprise operation platform, decrypt the received management message according to the encryption key of the enterprise sensitive data or the encryption key of the enterprise non-sensitive data in the enterprise management key, and implement different operations according to different message contents.

15. The smart card according to claim 13, wherein the universal card application processing logic unit is further configured to receive a management message sent by the enterprise operation platform through the card-issuing party operation platform, and decrypt the received management message by successively using the pre-stored encryption key of the card-issuing party sensitive data or the pre-stored encryption key of the card-issuing party non-sensitive data, and the obtained encryption key of the enterprise sensitive data or the obtained encryption key of the enterprise non-sensitive data in the enterprise management key.

16. The smart card according to claim 13, 14 or 15, wherein the universal card application processing logic unit is further configured to perform integrity check on the received management message according to the pre-stored encryption key of the card-issuing party sensitive data or the pre-stored card-issuing party MAC key, and/or performing integrity check on the received management message according to the encryption key of the enterprise sensitive data or the enterprise MAC key in the enterprise management key; and implement decryption operation after the message passes the check.
